# EUROPEAN PATENT SPECIFICATION

(11) **EP 3 950 377 B1**
(45) Date of publication and mention of the grant of the patent: **17.01.2024**
(21) Application number: 20189983.8
(22) Date of filing: 07.08.2020
(51) Int. Cl.: B60B 33/04, B62B 3/00

(54) **MOVABLE BEARING DEVICE**
BEWEGLICHE LAGERVORRICHTUNG
DISPOSITIF DE ROULEMENT MOBILE

(43) Date of publication of application: 09.02.2022
(73) Proprietor: Ko, Wen-Shan, Changhua County 505 (TW)
(72) Inventor: Ko, Wen-Shan, Changhua County 505 (TW)
(74) Representative: Straus, Alexander

(56) References cited:
- DE-A1- 2 247 447
- DE-B2- 2 247 447
- KR-U- 20190 000 648
- US-A- 4 991 805
- US-B1- 7 163 214
- US-B2- 6 637 071

## Description

### BACKGROUND OF THE INVENTION

### 1. Field of the Invention

The present invention relates to bearing devices and more particularly, to a movable bearing device.

### 2. Description of the Related Art

With the continuous development of social economy, people are faced with a multitude of pressures and responsibilities in life, so they need an entertainment activity that can relax and relieve the pressure, such as singing in KTV Many people choose to sing in a karaoke box, but the traditional karaoke box has its limitations in terms of the number of people, usage time and venue size, and it is difficult to meet the needs of all consumers. Compared with the traditional karaoke box, later there was a mini karaoke booth that looked like a telephone booth, which allows a single person or a few people to sing to their heart's content. Not only did the consumption threshold be low, but it is not limited by the number of people and usage time, so it is quite popular among consumers.

The aforementioned mini karaoke booth is usually installed in commercial districts, department stores or movie theaters, and may need to be adjusted in accordance with the planning of the indoor space after a period of time. However, because the aforementioned mini karaoke booth is placed directly on the ground and constructed with a certain weight, it is necessary to move it by using suitable handling equipment. Therefore, the aforementioned mini karaoke booth lacks in flexibility.

Movable bearing devices are known for example from documents US 6 637 071 B2 or US 4 991 805 A.

### SUMMARY OF THE INVENTION

It is a primary objective of the present invention to provide a movable bearing device, which has good support effect and is easy to move, thereby enhancing flexibility in use.

To attain the above primary objective, the bearing device of the present invention includes a base, a plurality of casters, and a plurality of foot pads. The casters are attached to the bottom of the base and protruded from the bottom of the base. The foot pads are movably connected to the base in a way that the foot pads are movable relative to the base between a first position and a second position. When the foot pads are located at the first position, the bottom surfaces of the foot pads each have a height not higher than the bottom edges of the casters. When the foot pads are located at the second position, the bottom surfaces of the foot pads each have a height higher than the bottom edges of the casters.

Through the above-described configuration design, the bearing device of the present invention can be adjusted to two different usage modes according to actual needs. When the foot pads are operated to the first position, the bearing device is supported on the ground by means of the foot pads, such that the bearing device cannot be moved. When the foot pads are operated to the second position, the bearing device can be moved by means of the casters so as to facilitate the handling work.

According to the invention, the base includes a support frame having a plurality of threaded holes, and a top plate disposed on the top surface of the support frame and having a plurality of top holes. The foot pads each have a pad body and a screw provided with a bottom end thereof connected with the pad body. The screw of each of the foot pads is inserted into one of the top holes of the top plate and screwed to one of the threaded holes of the support frame, such that the foot pads can be moved upwards and downwards between the first position and the second position. When the foot pads are located at the first position, the top ends of the screws are not protruded from the top holes and the bottom surfaces of the pad bodies each have a height not higher than the bottom edges of the casters. When the foot pads are located at the second position, the top ends of the screws are protruded from the top holes and the bottom surfaces of the pad bodies each have a height higher than the bottom edges of the casters.

According to the invention, the base includes a bottom plate mounted to the bottom surface of the support frame and provided with a plurality of bottom holes and a plurality of openings. The screw of each of the foot pads passes through one respective bottom hole, and each of the casters is received in one respective opening.

Preferably, the support frame includes a frame body, a plurality of rib portions connected with the inner periphery of the frame body, a plurality of caster supporting portions fixedly connected between the inner periphery of the frame body and one of the rib portions, and a plurality of pad supporting portions. Each of the casters is attached to one respective caster supporting portion, and each of the threaded holes is formed in one respective pad supporting portion.

Preferably, the caster supporting portions each have two opposite lateral walls. Each of the casters is rotatably sleeved on a shaft provided with two ends thereof respectively inserted into two shaft holes each formed in one of the two lateral walls of one respective caster supporting portion. Two retaining rings are respectively fastened to two annular grooves each formed in one of the two ends of the shaft for preventing the shaft from being disengaged from one respective caster supporting portion, thereby completing the assembly of the caster.

Preferably, the casters each have a plurality of through holes passing through two opposite end surfaces thereof and arranged in an equally spaced manner around the center thereof.

Preferably, the casters are moved only in a straight line.

Further scope of applicability of the present invention will become apparent from the detailed description given hereinafter. However, it should be understood that the detailed description and specific examples, while indicating preferred embodiments of the invention, are given by way of illustration only.

### BRIEF DESCRIPTION OF THE DRAWINGS

FIG. 1 is a perspective view of a booth using the bearing device of the present invention.
FIG. 2 is a top perspective view of the bearing device of the present invention.
FIG. 3 is a bottom perspective view of the bearing device of the present invention.
FIG. 4 is an exploded perspective view of the base of the bearing device of the present invention.
FIG. 5 is a partial enlarged view of FIG. 2.
FIG. 6 is a partial exploded view of FIG. 5.
FIG. 7 is a partial enlarged view of FIG. 3.
FIG. 8 is a partial exploded view of FIG. 7.
FIG.9 is a cross-sectional view of a part of the bearing device of the present invention, showing that the foot pads are located at the first position.
FIG. 10 is similar to FIG. 9, but showing that the foot pads are located at the second position.

### DETAILED DESCRIPTION OF THE INVENTION

First of all, it is to be mentioned that throughout the specification, including the embodiments described below and the claims, the nouns relating to directionality are based on the directions in the figures. Besides, same reference numerals used in the following preferred embodiments and the appendix drawings designate same or similar elements or the structural features thereof.

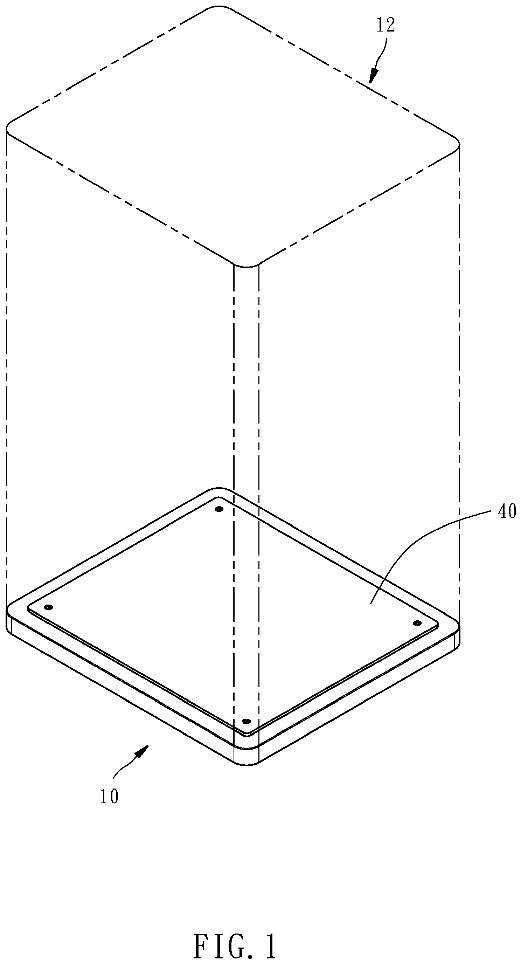

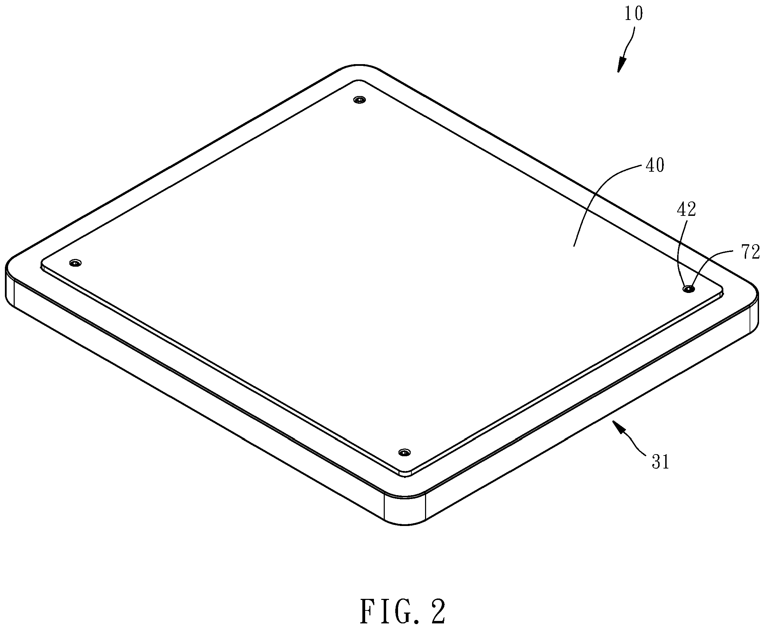

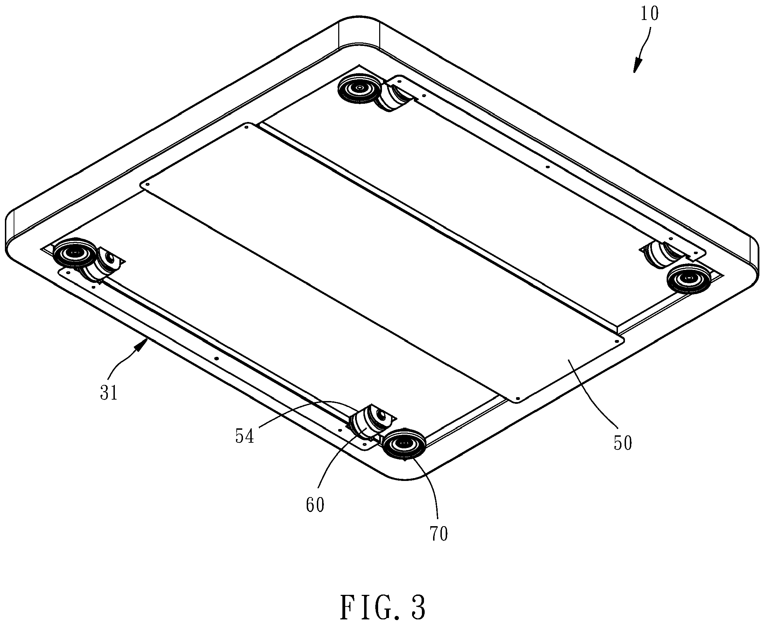

Referring to FIG. 1, the bearing device 10 of the present invention is adapted for a box 12, such as mini karaoke booth, that accommodate a single person or a few people to carry the weight of the human body and related audio-visual equipment. Referring to FIGS. 2 to 4, the bearing device 10 of the present invention comprises a base 20, a plurality of casters 60 (take four as an example), and a plurality of foot pads 70 (take four as an example).

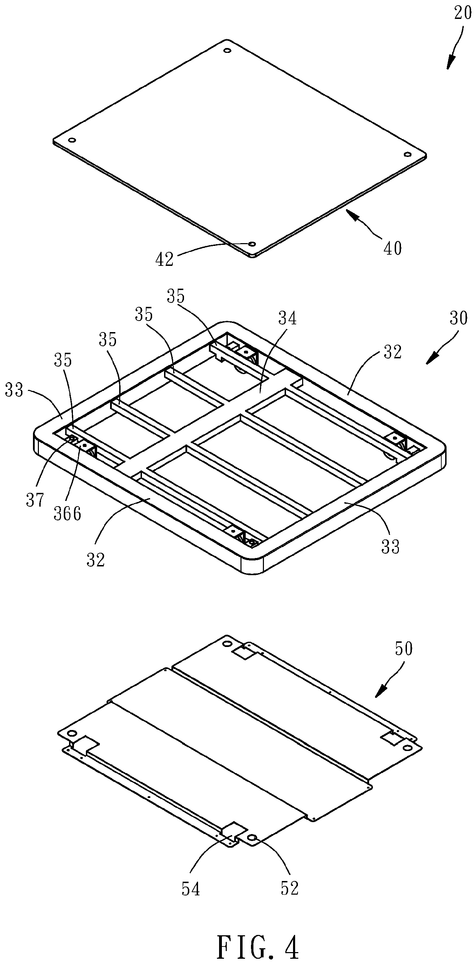

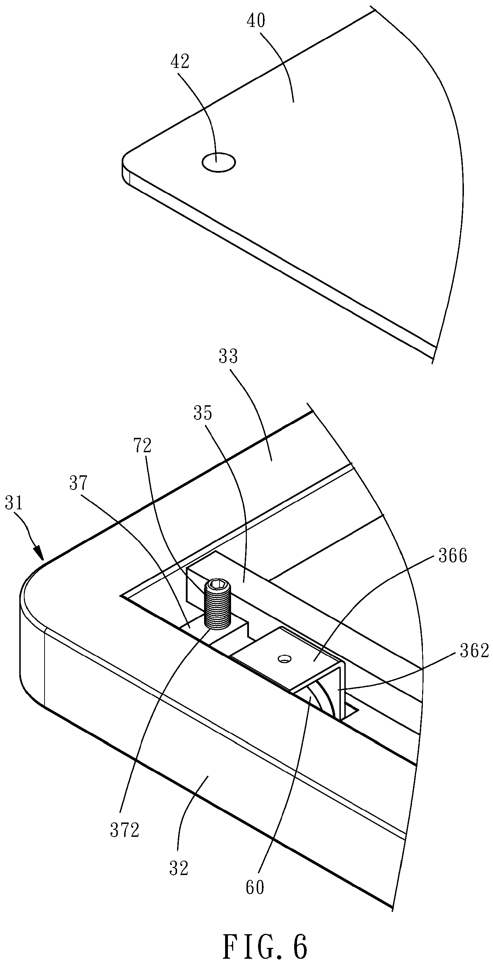

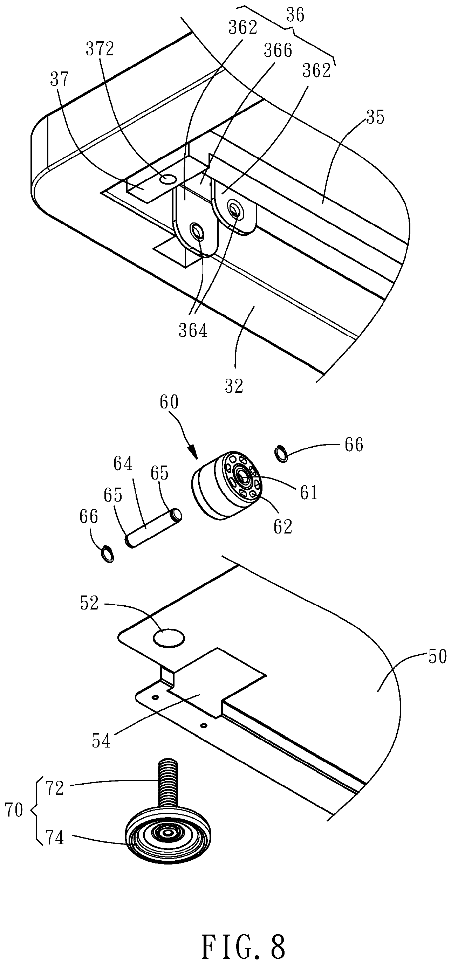

As shown in FIGS.4 and 6, the base 20 includes a support frame 30 integrally formed as a one-piece structure and provided with a frame body 31, a first rib portion 34, four second rib portions 35, four caster supporting portions 36, and four pad supporting portions 37. The frame body 31 has a quadrilateral shape with two opposite first frame strips 32 and two opposite second frame strips 33. Two ends of the first rib portion 34 are connected with the inner surfaces of the first frame strips 32, and two ends of each of the second rib portions 35 are connected with the inner surfaces of the second frame strips 33. Further, the second rib portions 35 are vertically connected with the first rib portion 34 and arranged in an equally spaced manner along the extending direction of the first rib portion 34. The caster supporting portions 36 are located in the four corners of the frame body 31, and each have two lateral walls 362 and a top wall 366 connected between the two lateral walls 362, as shown in FIG. 8. The two lateral walls 362 each have a shaft hole 364, and the outer surfaces of the two lateral walls 362 are respectively connected with the first frame strip 32 and the second rib portion 35 closest to the first frame strip 32. The pad supporting portions 37 are located in the four corners of the frame body 31 and respectively connected between the first frame strip 32 and the second rib portion 35 closest to the first frame strip 32, as shown in FIG. 8. The pad supporting portions 37 each have a threaded hole 372 passing through the top and bottom surfaces thereof.

Further, the base 20 has a quadrilateral top plate 40 and a quadrilateral bottom plate 50. The top plate 40 is located above the support frame 30 and fixedly connected with the top surface of the frame body 31. The bottom plate 50 is located under the support frame 30 and screwed to the bottom surface of the frame body 31. As shown in FIGS. 6 and 8, the four corners of the top plate 40 each have a top hole 42, and the four corners of the bottom plate 50 each have a bottom hole 52 and an opening 54.

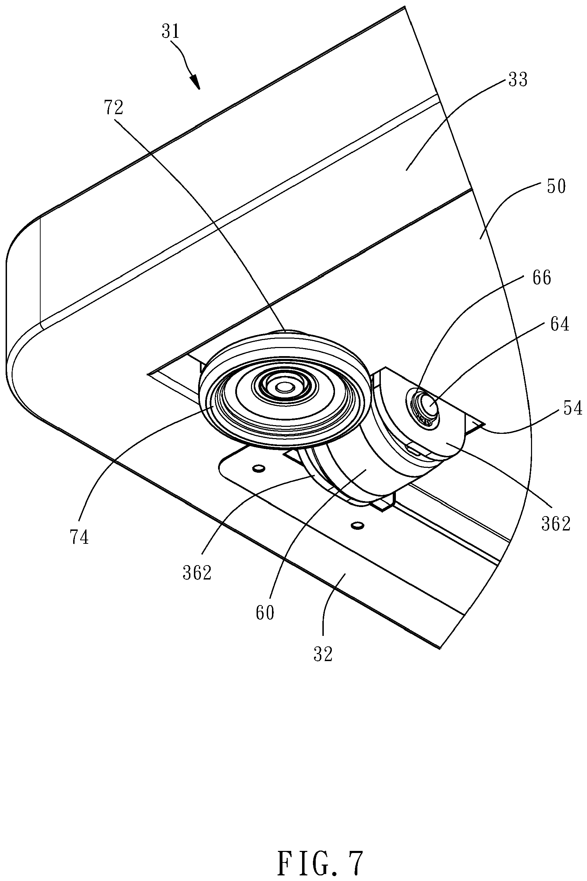

As shown in FIGS. 7 and 8, each of the casters 60 is located between the two lateral walls 362 of one respective caster support portion 36 of the support frame 30. The casters 60 each have a center hole 61 rotatably sleeved on a shaft 64. Two ends of the shaft 64 are respectively inserted into the two shaft holes 364 and each have an annular groove 65. The shaft 64 can be prevented from being disengaged from one respective caster supporting portion 36 by fastening two retaining rings 66 to the two annular grooves 65 of the shaft 64, thereby completing the assembly of the caster 60. By this way, the casters 60 are exposed out of the bottom of the base 20 and partially received in the openings 54 of the bottom plate 50. As shown FIG. 8, the casters 60 each have a plurality of through holes 62 passing through two opposite end surfaces thereof and arranged in an equally spaced manner around the center hole 61, such that the casters 60 each have a cushion effect.

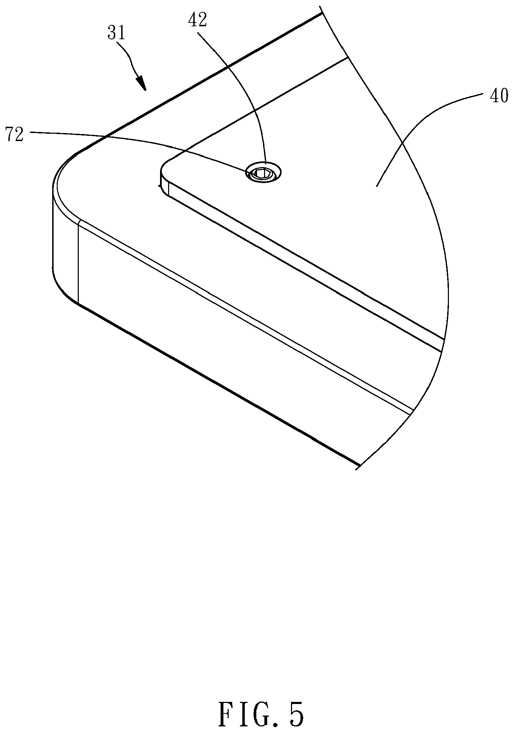

As shown in FIGS. 7 and 8, each of the foot pads 70 has a screw 72 and a pad body 74 connected with the bottom end of the screw 72. The screw 72 of each of the foot pads 70 passes through one respective bottom hole 52 of the bottom plate 50 from bottom to top and is screwed to one respective threaded hole 372 of the pad supporting portion 37 of the support frame 30. Further, as shown in FIGS. 5 and 6, the top end of each of the screws 72 is inserted into one respective top hole 42 of the top plate 40 from bottom to top.

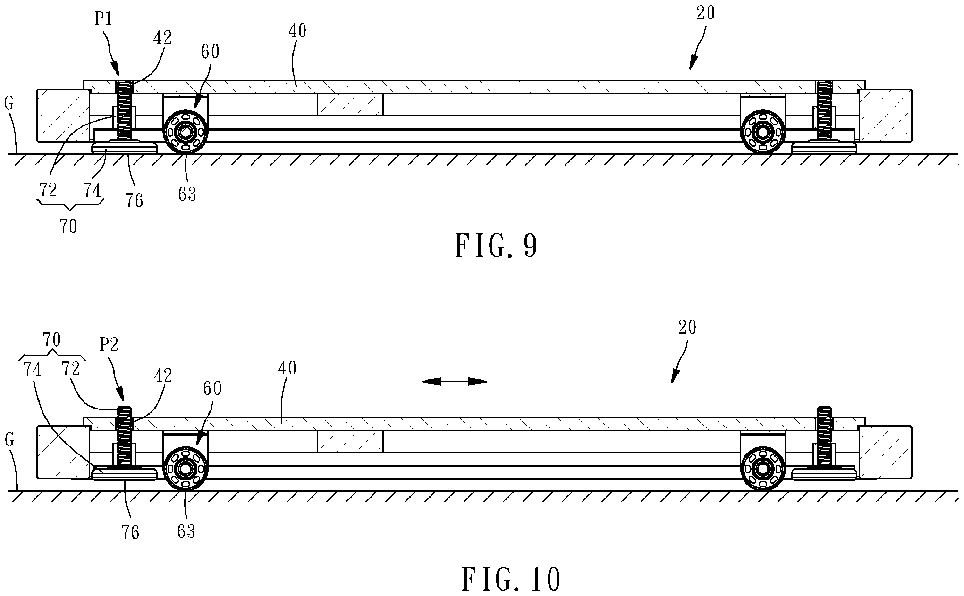

It can be known from the above description that a user can drive the foot pads 70 to move upwards and downwards relative to the base 20 by turning the screws 72 from the top holes 42 with a hand tool (such as a screwdriver). When the foot pads 70 are located at a first position P1 as shown in FIG. 9, the top ends of the screws 72 are not protruded from the top holes 42 and the bottom surfaces 76 of the pad bodies 74 each have a height not higher than the bottom edges 63 of the casters 60, such that the bearing device 10 is supported on the ground G by means of the foot pads 70. By this way, the bearing device 10 cannot be moved. However, as shown in FIG. 9, the bottom surfaces 76 of the pad bodies 74 and the bottom edges 63 of the casters 60 are flushed with each other, but in fact, the bottom surfaces 76 of the pad bodies 74 can be adjusted to a height lower than the bottom edges 63 of the casters 60.

When the foot pads 70 are moved upwards to a second position P2 as shown in FIG. 10, the top ends of the screws 72 are protruded from the top holes 42 and the bottom surfaces 76 of the pad bodies 74 each have a height higher than the bottom edges 63 of the casters 60, such that the casters 60 touch the ground G. By this way, the bearing device 10 can be moved by means of the casters 60 only in a straight line.

That is to say, the bearing device 10 of the present invention can be adjusted to two different usage modes according to actual needs. When the foot pads 70 are operated to the second position P2 as shown in FIG. 10, the bearing device 10 can be moved to facilitate the handling work. When the foot pads 70 are operated to the first position P1 as shown in FIG. 9, the bearing device 10 is supported on the ground G and unable to be moved. Therefore, the bearing device 10 of the present invention provides considerable freedom of use and flexibility in use.

## Claims

1. A movable bearing device (10) comprising:
a base (20);
a plurality of casters (60) attached to a bottom of the base (20) and protruded from the bottom of the base (20); and
a plurality of foot pads (70) movably connected to the bottom of the base (20) and movable relative to the base (20) between a first position where bottom surfaces of the foot pads each have a height not higher than bottom edges of the casters (60), and a second position where the bottom surfaces of the foot pads each have a height higher than the bottom edges of the casters (60);
wherein each of the foot pads includes a pad body (74) and a screw (72) having a top end thereof inserted into one respective top hole (42) and a bottom end thereof connected with one respective pad body(74); wherein the device includes a top plate (40) and a bottom plate (50), said bottom plate (50) is mounted to a bottom surface of a support frame and provided with a plurality of bottom holes (52) and a plurality of openings (54);
the screw (72) of each of the foot pads passes through one respective bottom hole (52);
**characterized in that**
the base (20) includes a support frame (30) having a plurality of threaded holes (372), and the top plate (40) is disposed on a top surface of the support frame (30) and having a plurality of top holes (42); the screws (72) of the casters (60) are respectively screwed to the threaded holes (372) such that the foot pads are movable relative to the base (20) between the first position where the top ends of the screws (72) are not protruded from the top holes (42) and the bottom surfaces of the pad bodies each have a height not higher than the bottom edges of the casters (60), and the second position where the top ends of the screws (72) are protruded from the top holes (42) and the bottom surfaces of the pad bodies each have a height higher than the bottom edges of the casters (60);
wherein a part of each of the casters (60) is received in one respective opening (54) of the bottom plate (50).

2. The movable bearing device (10) as claimed in claim 1, wherein the support frame (30) includes a frame body (31), a plurality of rib portions connected with an inner periphery of the frame body (31), a plurality of caster supporting portions (36) fixedly connected between the inner periphery of the frame body (31) and one of the rib portions, and a plurality of pad supporting portions (37); each of the casters (60) is attached to one respective caster supporting portion; each of the threaded holes (372) is formed in one respective pad supporting portion.

3. The movable bearing device (10) as claimed in claim 2, wherein the caster supporting portions (36) each have two lateral walls (362); each of the casters (60) is rotatably sleeved on a shaft (64) provided with two ends thereof inserted into two shaft holes (364) of the two lateral walls (362) of one respective caster supporting portion; two retaining rings (66) are respectively fastened to two annular grooves (65) each formed in one of the two ends of the shaft (64).

4. The movable bearing device (10) as claimed in claim 1, wherein the casters (60) each have a plurality of through holes passing through two opposite end surfaces thereof and arranged in an equally spaced manner around a center thereof.

5. The movable bearing device (10) as claimed in claim 1, wherein the casters (60) are moved only in a straight line.

## Patentansprüche

1. Bewegliche Lagervorrichtung (10), welche umfasst:
eine Basis (20);
mehrere Rollen (60), die an einer Unterseite der Basis (20) befestigt sind und von der Unterseite der Basis (20) hervorstehen; und
mehrere Fußpolster (70), die beweglich mit der Unterseite der Basis (20) verbunden und relativ zu der Basis (20) zwischen einer ersten Position, in der die Unterseiten der Fußpolster jeweils eine Höhe aufweisen, die nicht höher als die Unterkanten der Rollen (60) ist, und einer zweiten Position beweglich sind, in der die Unterseiten der Fußpolster jeweils eine Höhe aufweisen, die höher als die Unterkanten der Rollen (60) ist;
worin jedes der Fußpolster einen Polsterkörper (74) und eine Schraube (72) aufweist, deren oberes Ende in ein entsprechendes oberes Loch (42) eingesetzt ist und deren unteres Ende mit einem entsprechenden Polsterkörper (74) verbunden ist; worin die Vorrichtung eine obere Platte (40) und eine untere Platte (50) aufweist, worin die untere Platte (50) an einer Unterseite eines Tragrahmens (30) angebracht ist und mit mehreren unteren Löchern (52) und mehreren Öffnungen (54) versehen ist; worin die Schraube (72) jedes der Fußpolster durch ein entsprechendes unteres Loch (52) hindurchgeht;
**dadurch gekennzeichnet, dass** die Basis (20) einen Tragrahmen (30) mit mehreren Gewindelöchern (372) umfasst, und die obere Platte (40) auf einer oberen Fläche des Tragrahmens (30) angeordnet ist und mehreren obere Löcher (42) aufweist; worin die Schrauben (72) der Rollen (60) jeweils mit den Gewindelöchern (372) verschraubt sind, so dass die Fußpolster relativ zu der Basis (20) zwischen der ersten Position, in der die oberen Enden der Schrauben (72) nicht aus den oberen Löchern (42) herausragen und die Unterseiten der Polsterkörper jeweils eine Höhe aufweisen, die nicht höher als die Unterkanten der Rollen (60) ist und die zweite Position, in der die oberen Enden der Schrauben (72) aus den oberen Löchern (42) herausragen und die unteren Oberflächen der Polsterkörper jeweils eine höhere Höhe als die Unterkanten der Rollen (60) aufweisen;
worin ein Teil jeder der Rollen (60) in einer entsprechenden Öffnung (54) der Bodenplatte (50) aufgenommen ist.

2. Bewegliche Lagervorrichtung (10) nach Anspruch 1, worin der Tragrahmen (30) einen Rahmenkörper (31), mehrere Rippenabschnitte, die mit einem Innenumfang des Rahmenkörpers (31) verbunden sind, mehrere Rollenhalterungsabschnitte (36), die fest zwischen dem Innenumfang des Rahmenkörpers (31) und einem der Rippenabschnitte verbunden sind, und mehrere Polsterhalterungsabschnitte (37) umfasst; worin jede der Rollen (60) an einem jeweiligen Rollenhalterungsabschnitt befestigt ist; und jedes der Gewindelöcher (372) in einem jeweiligen Polsterhalterungsabschnitt ausgebildet ist.

3. Bewegliche Lagervorrichtung (10) nach Anspruch 2, worin die Rollenträgerteile (36) jeweils zwei Seitenwände (362) aufweisen; jede der Rollen (60) drehbar auf einer Achse (64) gelagert ist, die mit ihren beiden Enden in zwei Achslöcher (364) der beiden Seitenwände (362) eines jeweiligen Rollenträgerteils eingesetzt ist; worin zwei Sicherungsringe (66) an zwei Ringnuten (65) entsprechend befestigt sind, die in je einem der beiden Enden der Achse (64) ausgebildet sind.

4. Bewegliche Lagervorrichtung (10) nach Anspruch 1, worin die Rollen (60) jeweils mehrere Durchgangslöcher aufweisen, die durch zwei abgewandte Endflächen der Rollen hindurchgehen und in gleichem Abstand um eine Mitte dieser angeordnet sind.

5. Bewegliche Lagervorrichtung (10) nach Anspruch 1, worin die Rollen (60) nur in einer geraden Linie bewegt werden.

## Revendications

1. Dispositif de roulement mobile (10) comprenant:
une base (20);
une pluralité de roulettes (60) fixées au fond de la base (20) et faisant saillie à partir du fond de la base (20); et
une pluralité de tampons-pieds (70) reliés de manière mobile au fond de la base (20) et mobiles par rapport à la base (20) entre une première position dans laquelle les surfaces inférieures des tampons-pieds ont une hauteur inférieure aux bords inférieurs des roulettes (60) et une deuxième position dans laquelle les surfaces inférieures des tampons-pieds ont une hauteur supérieure aux bords inférieurs des roulettes (60);
dans lequel chaque tampon-pied comprend un corps de tampon (74) et une vis (72) dont l'extrémité supérieure est insérée dans un trou supérieur respectif (42) et dont l'extrémité inférieure est reliée à un corps de tampon respectif (74); dans lequel le dispositif comprend une plaque supérieure (40) et une plaque inférieure (50), ladite plaque inférieure (50) est montée sur une surface inférieure d'un cadre de support (30) et pourvue d'une pluralité de trous inférieurs (52) et d'une pluralité d'ouvertures (54); la vis (72) de chaque tampon-pied passe à travers un trou inférieur respectif (52);
**caractérisé en ce que** la base (20) comprend un cadre de support (30) ayant une pluralité de trous filetés (372), et la plaque supérieure (40) est disposée sur une surface supérieure du cadre de support (30) et a une pluralité de trous supérieurs (42); les vis (72) des roulettes (60) sont respectivement vissées aux trous filetés (372) de manière à ce que les tampons puissent se déplacer par rapport à la base (20) entre la première position dans laquelle les extrémités supérieures des vis (72) ne dépassent pas des trous supérieurs (42) et les surfaces inférieures des corps des tampons ont chacune une hauteur qui ne dépasse pas les bords inférieurs des roulettes (60), et la deuxième position dans laquelle les extrémités supérieures des vis (72) dépassent des trous supérieurs (42) et les surfaces inférieures des corps des tampons ont chacune une hauteur supérieure aux bords inférieurs des roulettes (60);
dans laquelle une partie de chacune des roulettes (60) est reçue dans une ouverture respective (54) de la plaque inférieure (50).

2. Dispositif de roulement mobile (10) selon la revendication 1, dans lequel le cadre de support (30) comprend un corps de cadre (31), plusieurs parties de nervures reliées à une périphérie intérieure du corps de cadre (31), plusieurs parties de support de roulette (36) reliées de manière fixe entre la périphérie intérieure du corps de cadre (31) et l'une des parties de nervures, et plusieurs parties de support de patin (37); chacune des roulettes (60) est fixée à une partie de support de roulette respective; chacun des trous filetés (372) est formé dans une partie de support de patin respective.

3. Dispositif de roulement mobile (10) selon la revendication 2, dans lequel les parties de support des roulettes (36) ont chacune deux parois latérales (362); chacune des roulettes (60) est manchonnée en rotation sur un arbre (64) dont les deux extrémités sont insérées dans deux trous d'arbre (364) des deux parois latérales (362) d'une partie de support des roulettes respective; deux anneaux de retenue (66) sont respectivement fixés à deux rainures annulaires (65) formées chacune dans l'une des deux extrémités de l'arbre (64).

4. Dispositif de roulement mobile (10) selon la revendication 1, dans lequel les roulettes (60) ont chacune une pluralité de trous traversant leurs deux surfaces d'extrémité opposées et disposés à égale distance autour de leur centre.

5. Dispositif de roulement mobile (10) selon la revendication 1, dans lequel les roulettes (60) se déplacent uniquement en ligne droite.
